# EUROPEAN PATENT SPECIFICATION

(11) **EP 4 331 898 B1**
(45) Date of publication and mention of the grant of the patent: **24.09.2025**
(21) Application number: 22192542.3
(22) Date of filing: 29.08.2022
(51) Int. Cl.: B60L 50/72, B60L 58/30, H01M 8/0432, F17C 13/02, G01M 3/00, B60L 3/00, F17C 13/12, H01M 8/04082, H01M 8/04664

(54) **METHOD FOR DETECTING A FAULT IN A TANK SYSTEM, COMPUTER PROGRAM PRODUCT, TANK SYSTEM AND FUEL CELL ELECTRIC VEHICLE**
VERFAHREN ZUR ERKENNUNG EINES FEHLERS IN EINEM TANKSYSTEM, COMPUTERPROGRAMMPRODUKT, TANKSYSTEM UND BRENNSTOFFZELLEN-ELEKTROFAHRZEUG
PROCÉDÉ DE DÉTECTION D'UN DÉFAUT DANS UN SYSTÈME DE RÉSERVOIR, PRODUIT PROGRAMME D'ORDINATEUR, SYSTÈME DE RÉSERVOIR ET VÉHICULE ÉLECTRIQUE À PILE À COMBUSTIBLE

(43) Date of publication of application: 06.03.2024
(73) Proprietor: AVL List GmbH, 8020 Graz (AT)
(72) Inventor: Alzorgan, Mohammad, Coventry (GB); Harb, Elias, Coventry (GB); Al-Raqqad, Sharif, Coventry (GB)

(56) References cited:
- CN-A- 110 926 707
- DE-A1- 102014 213 745
- US-A1- 2015 134 277

## Description

The present invention relates to a method for detecting a fault in a tank system comprising multiple individual tanks for storing hydrogen connected to a common hydrogen supply line, a computer program product, a tank system and a fuel cell electric vehicle. It is known from the prior art to use tank systems comprising multiple individual tanks for storing hydrogen connected to a common hydrogen supply line in different applications such as fuel cell electric vehicles. In such tank systems, typically a common pressure sensor is used in the common hydrogen supply line. By means of this common pressure sensor, a fault in the tank system, such as a leak, may be detected, when the pressure falls below or above a predefined pressure level based on the operating mode. In this case, the entire tank system needs to be shut down for safety reasons. If it would be possible to identify which one of the multiple individual tanks has the fault, it may be possible to only shut off the faulty tank rather than the entire tank system. Also, such fault identification would allow for a faster repair.

A method for detecting a fault in a tank system is also known from CN 110 926 707 A. In this known method the temperature increase of each of the multiple tanks of the hydrogen storage system is measured, during filling of the tanks, with respective temperature sensors. The temperature increase for each tank is compared to the average increase across all the tanks. If the temperature increase of a specific tank lies outside of a predetermined threshold away from the average, it is considered to be leaking.

It is the task of the present invention to at least partially eliminate the disadvantages described above. In particular, it is the object of the present invention to provide a method for detecting a fault in a tank system comprising multiple individual tanks for storing hydrogen connected to a common hydrogen supply line, which, in a cost-effective and simple manner, can detect individual faulty tanks.

The foregoing problem is solved by a method having the features of claim 1, a computer program product having the features of claim 12, a tank system having the features of claim 13 and a fuel cell electric vehicle having the features of claim 14. Further features and details of the invention result from the subclaims, the description and the drawings. Features and details described in connection with the method according to the invention are of course also valid in connection with the computer program product according to the invention as well as the tank system and the fuel cell electric vehicle according to the invention and vice versa in each case, so that with regard to the disclosure concerning the individual aspects of the invention reference is or can always be made mutually.

According to the invention, a method for detecting a fault, in particular a leak, in a tank system comprising multiple individual tanks for storing hydrogen connected to a common hydrogen supply line is provided. The method comprises the following steps:
- receiving individual temperatures of each one of the individual tanks,
- calculating at least one average value of the individual temperatures and a deviation value of the individual temperatures around one of the at least one average value,
- checking if the deviation value is exceeding a predetermined deviation value threshold,
- detecting a fault of the tank system if the deviation value is exceeding the predetermined deviation value threshold,
- wherein the following steps are performed to locate the fault (F) in the tank system (19) and to assign the fault (F) to a specific tank (12):
- calculating a normal temperature threshold range based on one of the at least one average value and the deviation value,
- checking if all of the individual temperatures are within the normal temperature threshold range, and
- detecting a fault of an individual tank if its individual temperature is outside of the normal temperature threshold range.

In contrast to the state of the art, the invention provides for a method which can detect or identify a fault, the fault being a leak or problem with the tank valve, of an individual tank rather than only a fault of the tank system without specifying which individual tank is causing the fault of the overall tank system, which may be reflected in a pressure reading of a common pressure sensor in the common hydrogen supply line, where the pressure reading is out of a predefined common pressure threshold range. This is made possible by using the individual temperature readings of each one of the individual tanks. For this purpose, every individual tank may have an individual temperature sensor. The individual temperature itself does not allow for detecting or identifying a faulty individual tank among all individual tanks. However, the inventive concept is that the individual temperatures are compared with each other to find a deviation of one of the individual tanks that is sufficient enough to judge that there is a fault. This is done by calculating an average value and based on that a deviation value. If that deviation value, meaning a deviation among the individual temperatures, is higher than a predetermined deviation value threshold, a fault of the tank system is detected. This fault detection may also be referred to as a rough detection, where a fault among the individual tanks is detected but cannot yet be located, i.e., assigned to one or several of the individual tanks. In order to locate the fault in the tank system, i.e., assign it to one or several of the individual tanks, the following steps in the method are performed. That is, to also pinpoint the one or more tanks having the fault, the individual temperatures are being compared or checked against a normal temperature threshold range. The normal temperature threshold range is based on both, the previously calculated deviation value and an average value of the individual temperatures. As will be explained later, the average value for the calculation of the deviation value and for the calculation of the normal temperature threshold range may be the same. However, preferably, different kinds of average values are used for each case in order to increase the fault detection reliability of the method.

The number of the multiple tanks may be two and more. In particular, the number of individual tanks in the tank system may be three, four or more, for example.

Although the method refers to detecting a fault of an individual tank it should be clear that by means of the method any number of faulty individual tanks may be detected because all the individual temperatures of the individual tanks are checked against the normal temperature threshold range.

Further, it should be understood that the tank system comprises individual tanks capable of storing hydrogen. This means that it is not necessary that the individual tanks are actually storing hydrogen but they may also store other fluids, in particular gases, when needed and the method can be applied to the tank system independent from the particular fluid or gas. The same applies to the common hydrogen supply line, which is capable of transporting hydrogen, but not necessarily carries hydrogen. However, it is favorable that the individual tanks store hydrogen due to their capability of doing so, which requires very good insulation of the tanks to prevent leakage of the hydrogen. The same applies to the common hydrogen supply line, which favorably transports hydrogen to a device connected thereto, such as a fuel cell. Accordingly, the individual tanks may in particular be hydrogen tanks and the tank system may in particular be referred to as a hydrogen tank system.

It is possible that the operation of the detected individual tank having the fault is shut off. Shutting off the faulty tank has the advantage that a possible danger arising from the fault can at least be limited to a certain level before the fault is fixed. The shutting off may be performed in particular by a tank valve connecting each one of the individual tanks with the common hydrogen supply line. Thereby, individually shutting off the tanks is made easy.

It is possible that the average value around which the deviation value is calculated is a first average value, wherein the first average value is a mean of the individual temperatures.

This is in particular advantageous, when the deviation value is a standard deviation of the individual temperatures around the first average value. Using the standard deviation as deviation value allows for a fast calculation and has also been found to be favorable with regards to accuracy of the fault detection. In particular, the checking of standard deviation against the deviation value threshold allows for a fast and reliable check whether or not there is a fault in the tank system.

Further, it is possible that the average value based on which the normal temperature threshold range is calculated is a second average value, wherein the second average value is a median of the individual temperatures. It has been found that using the median as an average value for calculating the normal temperature threshold range further enhances the fault detection reliability of the method. While other average values, such as the mean, can in the alternative be individually or additionally in combination used to calculate the normal temperature threshold range, the median has been found to be particularly favorable due its capability of filtering outlier values (indicating a fault) that distort the results.

Moreover, it is possible that at least some or all of the steps of the method are repeated continuously. This in particular relates to the steps of receiving, calculating (first and/or second calculating step), checking (first and/or second checking step) and/or, if applicable, detecting (first and/or second detecting step), of the method. But it may also include other steps of the method as mentioned herein. The advantage of this is that a continuous fault monitoring is being provided. The steps may in particular be repeated at a predefined time interval of a few minutes or a minute or, preferably, a few seconds or milliseconds or a second or millisecond, for example.

In the alternative or in addition, the method may be triggered by a certain event or action. For example, it may be provided that the common hydrogen supply line comprises a common pressure sensor for measuring the pressure of the hydrogen in the common hydrogen supply line. This has the advantage that a further rough fault detection possibility may be included in the method. For this purpose, the measured common pressure may be checked against a normal pressure threshold range. If the measured common pressure is outside of the normal pressure threshold range, a fault of the tank system may be indicated. But with this further rough fault detection possibility alone it is not possible to pinpoint the faulty individual tank. In this regard, the above-described method using the individual temperatures and normal temperature threshold range may be additionally used to not only verify the fault detection by means of the common pressure measurement but also pinpoint which one of the individual tanks has a fault. In particular, the fault detection when the measured common pressure is outside of the normal pressure threshold range may be used as the above-mentioned certain event, that may trigger the execution of the above-described method including the steps of receiving, calculating, checking and detecting. Accordingly, the method capable of detecting an individual faulty tank may only be carried out when a fault of the tank system is detected based on the common pressure reading.

According to the invention the fault is a leak of an individual tank or a fault of a tank valve connecting the individual tank with the common hydrogen supply line. The leak of an individual tank may be lying within the tank itself while the faulty tank valve is a periphery associated with the individual tank.

It is possible that the individual temperatures are measured by individual temperature sensors of each one of the individual tanks. Further, it is possible that the individual temperatures are internal temperatures of the hydrogen inside of the individual tanks. These temperature sensors may be provided in the individual tanks for safety reasons so that their temperature may always be observed. However, the invention may make use of these for the further purpose of detecting faults, in particular in relation to leaks.

It is possible that each one of the individual tanks is connected via an individual tank valve to the common hydrogen supply line. The individual tank valve is considered periphery and thereby part of the individual tank. The individual tank valve has the particular advantage that faulty tanks may be shut off from supplying hydrogen via the common hydrogen supply line.

It is possible that the tank system is a hydrogen tank system of a fuel cell electric vehicle. While the fuel cell electric vehicle is a particularly preferred embodiment of a device using the tank system as described above it may also be possible to use other devices making use of stored hydrogen. Such may be, for example, hydrogen storages, fuel cell plants etc.

A further object of the present invention is a computer program product comprising instructions which, when the program is executed by a computer, cause the computer to perform the method according to the invention.

Thus, a computer program product according to the invention brings the same advantages as have been explained in detail with reference to the method according to the invention.

The computer program product may be a computer program per se or a product, such as a computer-readable data storage device, on which a computer program for carrying out the method according to the invention may be stored.

A further object of the present invention is a tank system comprising multiple individual tanks for storing hydrogen connected to a common hydrogen supply line, wherein the tank system comprises a control unit configured to carry out the method according to the invention.

Thus, a tank system according to the invention brings the same advantages as have been explained in detail with reference to the method according to the invention.

The control unit of the tank system may in particular be logically connected to the individual temperature sensors of each one of the individual tanks. Thereby, the control unit may receive the individual temperatures or, in other words, individual temperature readings of each one of the individual tanks. Moreover, the control unit may in particular be logically connected to the individual tank valves of each one of the individual tanks. Thereby, the control unit may shut off an individual tank detected as having a fault from supplying hydrogen to the common hydrogen supply line.

The control unit may be or comprise a computer for carrying out the steps of the method of the invention. Moreover, the control unit may comprise individual modules for performing each one of the steps of the method, e.g., a receiving module for receiving individual temperatures of each one of the individual tanks, a calculating module for calculating a normal temperature threshold range based on the individual temperatures, a checking module for checking if all of the individual temperatures are within the normal temperature threshold range and a detecting module for detecting a fault of an individual tank if its individual temperature is outside of the normal temperature threshold range.

The modules of the control unit may, for example, each be implemented by separate computer program code or jointly by common computer program code and/or by separate or common functional units of the control unit. It is also possible that individual modules are implemented in a common module, for example the calculating module and the checking module.

A further object of the present invention is a fuel cell electric vehicle comprising the tank system of the invention and a fuel cell system fluidically connected to the common hydrogen supply line for supplying the fuel cell system with hydrogen from the tank system.

Thus, a fuel cell electric vehicle according to the invention brings the same advantages as have been explained in detail with reference to the method according to the invention.

The fuel cell system may comprise one or multiple fuel cell stacks and balance of plants periphery, such as pumps, sensors, heat exchangers, seals, compressors, recirculation blowers, intercoolers and humidifiers.

Further advantages, features and details of the invention will be apparent from the following description, in which embodiments are described in detail with reference to the drawings. It shows schematically:
- Fig. 1: a fuel cell electric vehicle according to an embodiment of the invention,
- Fig. 2: a method according to an embodiment of the invention,
- Fig. 3: the method of Fig. 2 with a normal temperature threshold range illustrated in an exemplary way, and
- Fig. 4: the fuel cell electric vehicle of Fig. 1 with a fault illustrated in an exemplary way.

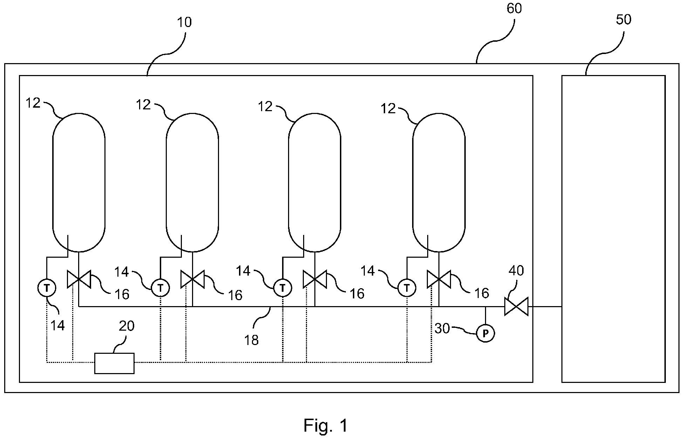

Identical or functionally identical elements are each designated with the same reference sign in Figures 1 to 4.

Figure 1 shows schematically a fuel cell electric vehicle 60 comprising a tank system 10 and a fuel cell system 50. The tank system 10 is a hydrogen tank system storing hydrogen for supply to the fuel cell system 50. The tank system 10 is fluidically connected via a common hydrogen supply line 18 to the fuel cell system 50, in particular a main supply line (not shown) of the fuel cell system 50. A common valve 40 in the common hydrogen supply line 18 is provided for regulating the hydrogen flow from the tank system 10 to the fuel cell system 50.

The fuel cell system 50 comprises one or multiple fuel cell stacks and balance of plants periphery, such as pumps, sensors, heat exchangers, seals, compressors, recirculation blowers, intercoolers and humidifiers. Although not shown, the fuel cell electric vehicle 60 may comprise one or multiple electric motors for driving the fuel cell electric vehicle 60. By means of supplying the fuel cell system 50 of the fuel cell electric vehicle 60 with hydrogen from the tank system 10, electricity is produced by the fuel cell system 50 and this electricity is supplied to the electric motor(s) of the fuel cell electric vehicle 60.

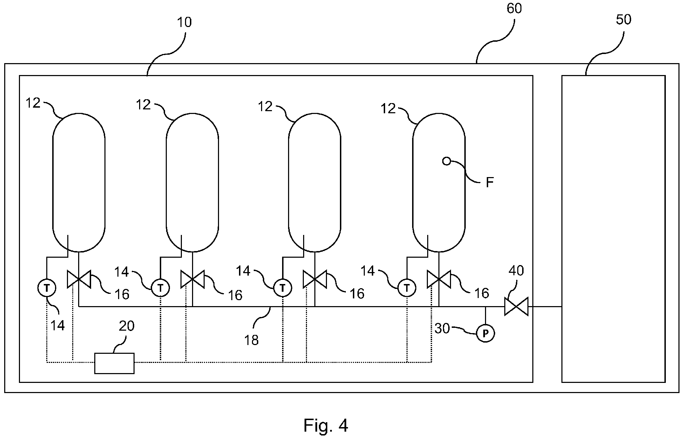

During normal operation of the fuel cell electric vehicle 60, the fuel cell electric vehicle 60 is safe to be operated. However, there may be a fault F (see Fig. 4), such as shown in Fig. 4 as a leak in the last one or fourth (counted from left to right) of the exemplary four individual tanks 12 of the tank system 10, which may render the further operation of the fuel cell electric vehicle 60 potentially dangerous.

In order to detect such fault F, the common hydrogen supply line 18 is provided with a common pressure sensor 30. Each one of the individual tanks 12 is fluidically connected via the common hydrogen supply line 18 to the fuel cell system 50. Accordingly, a common pressure P reading of the common pressure sensor 30 may be checked against a predefined normal common pressure threshold range and, if the common pressure P is outside that range, the fault F may be detected. Accordingly, the driver of the fuel cell electric vehicle 60 may be notified of the fault and appropriate measures, such as shut-off of the fuel cell electric vehicle 60, notifying assistance, driving to a repair shop etc., in particular depending on the extent of the leak, may be taken.

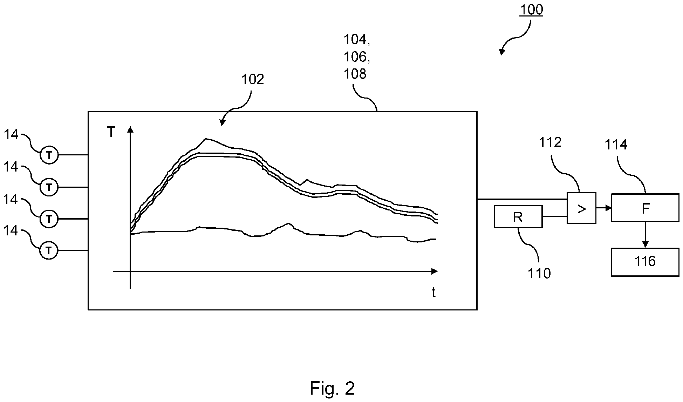

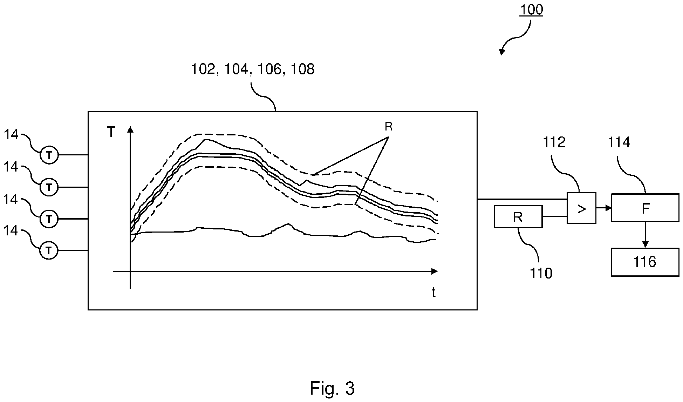

However, by means of the common pressure sensor 30 it is not possible to identify the fourth individual tank 12 as having the fault F. In this exemplary case, in order to detect and pinpoint the fault F to the fourth individual tank 12, the now explained method 100 (see Figs. 2 and 3) is being used.

The method 100, which is at least partially shown in Figs. 2 and 3, is executed by a control unit 20, which may comprise or be a computer, of the tank system 10. The control unit 20 is logically connected to individual temperature sensors 14 of the individual tanks 12 for measuring the internal temperature of the individual tanks 12. Accordingly, the control unit 20 receives the individual temperatures T from the temperature sensors 14.

Moreover, the control unit 20 is logically connected to tank valves 16 individually provided as periphery of each one of the individual tanks 12. The tank valves 16 are provided between the individual tanks 12 and the common hydrogen supply line 18. The control unit 20 is configured to control the tank valves 16. Accordingly, the control unit 20 may turn on or shut off the individual tank valves 16.

The method 100 in a first step 102 comprises receiving the individual temperatures T as readings from the individual temperature sensors 14. This first step 102, as well as the further steps of the method 100, are performed continuously as may be taken from the graph showing the individual temperatures T of the individual tanks 12 over time t.

From this graph it can be taken that one of the individual temperatures T, in this exemplary case namely the one of the fourth individual tank 12, is significantly lower than the other individual temperatures T. However, this alone is not sufficient to judge whether there is actually a fault F in the fourth individual tank 12 because there is no comparative measure.

The method 100 therefore continues in a second step 104 (not explicitly shown) with calculating a first average value of the individual temperatures T and a deviation value of the individual temperatures around the first average value. The first average value preferably is a mean of the individual temperatures T. The deviation value preferably is a standard deviation of the individual temperatures T around the first average value.

In a third step 106 (not explicitly shown) of the method 100, it is checked whether the calculated deviation value exceeds a predetermined deviation value threshold, which may be calculated based on the deviation value.

Then, in a fourth step 108 (not explicitly shown) of method 100, a fault F of the tank system 10 may be detected if the deviation value exceeds the predetermined deviation value threshold. Accordingly, based on the deviation value threshold, it is determined whether or not there is a fault F in the tank system 10. If a fault F is not detected, the method 100 can be repeated with the first step 102 through fourth step 108.

The proposed fault detection is highly reliable to detect that one or more of the tanks 12 have a fault F. The proposed fault detection is also able to quantify the magnitude of the fault. However, thereby alone it is not possible to exactly pinpoint which one or ones of the tanks 12 has or have the fault F.

For this reason, in a fifth step 110 of method 100, a normal temperature threshold range R is calculated by the control unit 20 based on the individual temperatures T of the individual tanks 12 (see Fig. 3). The normal temperature threshold range R is preferably calculated based on a second average value of the individual temperatures, which may be calculated before the fifth step 110 and which preferably is a median of all individual temperatures T, and the deviation value, in particular standard deviation, of the individual temperatures T such that the limits of the normal temperature threshold range R around the median are proportionate to the standard deviation. In other words, the normal temperature threshold range R may include the median and have an upper and lower boundary considering or corresponding to the standard deviation calculated in the second step 104 of method 100.

The normal temperature threshold R is shown with its limits in the graph of individual temperatures T over time t in Fig. 3.

In a sixth step 112 of method 100, it is checked if all of the individual temperatures T are within the normal temperature threshold range R. If this is the case, the first through sixth step 102-112 or only the fifth step 110 and sixth step 112 may be repeated.

If this is not the case, i.e., one of the individual temperatures T is not within the normal temperature threshold range R, such as it is the case with the individual temperature T of the fourth individual tank 12 due to the fault F in form of the leak therein as seen in Fig. 4, in a seventh step 114 of method 100 the fault F is detected of the individual tank 12 exhibiting the individual temperature T being outside of the normal temperature threshold range R.

Consequently, an eighth step 116 of the method 100 may be carried out, in which the tank valve 16 associated with the faulty individual tank 12 is shut off. Thereby, no hydrogen from the faulty individual tank 12 can be transported via the common hydrogen supply line 18 to the fuel cell system 50 for safety purposes.

Now that the faulty individual tank 12 is known, a consequent repair can be carried out faster because the fault F is already narrowed down to one of the individual tanks 12, whereby it is not necessary anymore to search for the fault F in all of the individual tanks 12.

The foregoing explanations of embodiments describe the present invention by way of example only.

### List of reference signs

- 10: tank system
- 12: individual tank
- 14: temperature sensor
- 16: tank valve
- 18: common hydrogen supply line
- 20: control unit
- 30: common pressure sensor
- 40: common valve
- 50: fuel cell system
- 60: fuel cell electric vehicle
- 100: method
- 102: first step
- 104: second step
- 106: third step
- 108: fourth step
- 110: fifth step
- 112: sixth step
- 114: seventh step
- 116: eighth step
- F: fault
- P: common pressure
- R: normal temperature threshold range
- T: individual temperature
- t: time

## Claims

1. A computer-implemented method (100) for detecting a fault (F) in a tank system (10) comprising multiple individual tanks (12) for storing hydrogen connected to a common hydrogen supply line (18), wherein the fault (F) is a leak of an individual tank (12) or a fault (F) of a tank valve (16) connecting the individual tank (12) with the common hydrogen supply line (18), wherein the method (100) comprises the following steps
- receiving individual temperatures (T) of each one of the individual tanks (12), the method **characterized by** the following steps:
- calculating at least one average value of the individual temperatures (T) and a deviation value of the individual temperatures (T) around one of the at least one average value,
- checking if the deviation value is exceeding a predetermined deviation value threshold,
- detecting a fault (F) of the tank system (10) if the deviation value is exceeding the predetermined deviation value threshold,
- wherein the following steps are performed to locate the fault (F) in the tank system (19) and to assign the fault (F) to a specific tank (12):
- calculating a normal temperature threshold range (R) based on one of the at least one average value and the deviation value,
- checking if all of the individual temperatures (T) are within the normal temperature threshold range (R), and
- detecting a fault (F) of an individual tank (12) if its individual temperature (T) is outside of the normal temperature threshold range (R).

2. Method (100) according to claim 1, **characterized in that** an operation of the detected individual tank (12) having the fault (F) is shut off.

3. Method (100) according to any of the previous claims, **characterized in that** the average value around which the deviation value is calculated is a first average value, wherein the first average value is a mean of the individual temperatures (T).

4. Method (100) according to claim 3, **characterized in that** the deviation value is a standard deviation of the individual temperatures (T) around the first average value.

5. Method (100) according to any of the previous claims, **characterized in that** the average value based on which the normal temperature threshold range (R) is calculated is a second average value, wherein the second average value is a median of the individual temperatures (T).

6. Method (100) according to any of the previous claims, **characterized in that** at least some of the steps of the method (100) are repeated continuously.

7. Method (100) according to any of the previous claims, **characterized in that** the common hydrogen supply line (18) comprises a common pressure sensor (30) for measuring the pressure (P) of the hydrogen in the common hydrogen supply line the v(18).

8. Method (100) according to any of the previous claims, **characterized in that** the individual temperatures (T) are measured by individual temperature sensors (14) of each one of the individual tanks (12).

9. Method (100) according to any of the previous claims, **characterized in that** the individual temperatures (T) are internal temperatures of the hydrogen inside of the individual tanks (12).

10. Method (100) according to any of the previous claims, **characterized in that** each one of the individual tanks (12) is connected via an individual tank valve (16) to the common hydrogen supply line (18).

11. Method (100) according to any of the previous claims, **characterized in that** the tank system (10) is a hydrogen tank system of a fuel cell electric vehicle (60).

12. Computer program product comprising instructions which, when the program is executed by a computer, cause the computer to perform the method (100) according to any of the previous claims.

13. Tank system (10) comprising multiple individual tanks (12) for storing hydrogen connected to a common hydrogen supply line (18), wherein the tank system (10) comprises a control unit (20) configured to carry out the method (100) according to any of claims 1 to 11.

14. Fuel cell electric vehicle (60) **characterized in that** it comprises the tank system (10) according to claim 13 and a fuel cell system (50) fluidically connected to the common hydrogen supply line (18) for supplying the fuel cell system (50) with hydrogen from the tank system (10).

## Patentansprüche

1. Computergestütztes Verfahren (100) zum Erkennen eines Fehlers (F) in einem Tanksystem (10), das mehrere einzelne Tanks (12) zur Speicherung von Wasserstoff umfasst, die an eine gemeinsame Wasserstoffversorgungsleitung (18) verbunden sind, wobei der Fehler (F) ein Leck eines einzelnen Tanks (12) oder ein Fehler (F) eines Tankventils (16) ist, das den einzelnen Tank (12) mit der gemeinsamen Wasserstoffversorgungsleitung (18) verbindet, wobei das Verfahren (100) den folgenden Schritt umfasst:
- Empfangen der individuellen Temperaturen (T) jedes einzelnen der einzelnen Tanks (12),
wobei das Verfahren durch die folgenden Schritte gekennzeichnet ist:
- Berechnen mindestens eines Durchschnittswerts der einzelnen Temperaturen (T) und eines Abweichungswerts der einzelnen Temperaturen (T) um einen der mindestens einen Durchschnittswerte herum,
- Überprüfen, ob der Abweichungswert einen vorgegebenen Abweichungswertschwellenwert überschreitet,
- Erkennen eines Fehlers (F) des Tanksystems (10), wenn der Abweichungswert den vorgegebenen Abweichungswertschwellenwert überschreitet,
- wobei die folgenden Schritte durchgeführt werden, um den Fehler (F) im Tanksystem (19) zu lokalisieren und den Fehler (F) einem bestimmten Tank (12) zuzuordnen:
- Berechnen eines normalen Temperaturbereichs (R) auf der Grundlage eines der mindestens einen Durchschnittswerts und des Abweichungswerts,
- Überprüfen, ob alle einzelnen Temperaturen (T) innerhalb des normalen Temperaturbereichs (R) liegen, und
- Erkennen eines Fehlers (F) eines einzelnen Tanks (12), wenn dessen einzelne Temperatur (T) außerhalb des normalen Temperaturbereichs (R) liegt.

2. Verfahren (100) nach Anspruch 1, **dadurch gekennzeichnet, dass** ein Betrieb des erkannten einzelnen Tanks (12) mit dem Fehler (F) abgeschaltet wird.

3. Verfahren (100) gemäß einem der vorhergehenden Ansprüche, **dadurch gekennzeichnet, dass** der Durchschnittswert, um den der Abweichungswert berechnet wird, ein erster Durchschnittswert ist, wobei der erste Durchschnittswert ein Mittelwert der einzelnen Temperaturen (T) ist.

4. Verfahren (100) gemäß Anspruch 3, **dadurch gekennzeichnet, dass** der Abweichungswert eine Standardabweichung der einzelnen Temperaturen (T) um den ersten Durchschnittswert ist.

5. Verfahren (100) gemäß einem der vorhergehenden Ansprüche, **dadurch gekennzeichnet, dass** der Durchschnittswert, auf dessen Grundlage der Normaltemperatur-Schwellenwert ränge (R) berechnet wird, ein zweiter Durchschnittswert ist, wobei der zweite Durchschnittswert ein Median der einzelnen Temperaturen (T) ist.

6. Verfahren (100) gemäß einem der vorhergehenden Ansprüche, **dadurch gekennzeichnet, dass** mindestens einige der Schritte des Verfahrens (100) kontinuierlich wiederholt werden.

7. Verfahren (100) gemäß einem der vorhergehenden Ansprüche, **dadurch gekennzeichnet, dass** die gemeinsame Wasserstoffversorgungsleitung (18) einen gemeinsamen Drucksensor (30) zum Messen des Drucks (P) des Wasserstoffs in der gemeinsamen Wasserstoffversorgungsleitung (18) umfasst.

8. Verfahren (100) gemäß einem der vorhergehenden Ansprüche, **dadurch gekennzeichnet, dass** die einzelnen Temperaturen (T) durch einzelne Temperatursensoren (14) jedes einzelnen Tanks (12) gemessen werden.

9. Verfahren (100) gemäß einem der vorstehenden Ansprüche, **dadurch gekennzeichnet, dass** die einzelnen Temperaturen (T) die Innentemperaturen des Wasserstoffs innerhalb der einzelnen Tanks (12) sind.

10. Verfahren (100) gemäß einem der vorhergehenden Ansprüche, **dadurch gekennzeichnet, dass** jeder der einzelnen Tanks (12) über ein individuelles Tankventil (16) mit der gemeinsamen Wasserstoffversorgungsleitung (18) verbunden ist.

11. Verfahren (100) gemäß einem der vorstehenden Ansprüche, **dadurch gekennzeichnet, dass** das Tanksystem (10) ein Wasserstofftanksystem eines Brennstoffzellen-Elektrofahrzeugs (60) ist.

12. Computerprogrammprodukt, das Anweisungen umfasst, die, wenn das Programm von einem Computer ausgeführt wird, den Computer veranlassen, das Verfahren (100) gemäß einem der vorhergehenden Ansprüche auszuführen.

13. Tanksystem (10) mit mehreren einzelnen Tanks (12) zur Speicherung von Wasserstoff, die mit einer gemeinsamen Wasserstoffversorgungsleitung (18) verbunden sind, wobei das Tanksystem (10) eine Steuereinheit (20) umfasst, die so konfiguriert ist, dass sie das Verfahren (100) gemäß einem der Ansprüche 1 bis 11 ausführt.

14. Brennstoffzellen-Elektrofahrzeug (60), **dadurch gekennzeichnet, dass** es das Tanksystem (10) gemäß Anspruch 13 und ein Brennstoffzellensystem (50) umfasst, das fluidisch mit der gemeinsamen Wasserstoffversorgungsleitung (18) verbunden ist, um das Brennstoffzellensystem (50) mit Wasserstoff aus dem Tanksystem (10) zu versorgen.

## Revendications

1. Procédé mis en œuvre par ordinateur (100) permettant de détecter un défaut (F) dans un système de réservoirs (10) comprenant plusieurs réservoirs individuels (12) destinés à stocker de l'hydrogène et raccordés à une conduite d'alimentation en hydrogène commune (18), dans lequel le défaut (F) est une fuite d'un réservoir individuel (12) ou un défaut (F) d'une vanne de réservoir (16) reliant le réservoir individuel (12) à la conduite d'alimentation en hydrogène commune (18), dans lequel le procédé (100) comprend l'étape suivante :
- Recevoir les températures individuelles (T) de chacun des réservoirs individuels (12),
le procédé étant **caractérisé par** les étapes suivantes :
- Calculer au moins une valeur moyenne des différentes températures (T) et une valeur d'écart des différentes températures (T) par rapport à l'une des au moins une valeur moyenne,
- Vérifier si la valeur d'écart dépasse un seuil d'écart prédéfini,
- Détecter un défaut (F) du système de réservoirs (10) lorsque la valeur d'écart dépasse le seuil d'écart prédéfini,
- les étapes suivantes étant effectuées pour localiser le défaut (F) dans le système de réservoirs (19) et attribuer le défaut (F) à un réservoir spécifique (12) :
- Calculer d'une plage de température normale (R) sur la base d'au moins une valeur moyenne et de la valeur d'écart,
- Vérifier que toutes les températures individuelles (T) se situent dans la plage de température normale (R) et
- Détecter d'un défaut (F) d'un réservoir individuel (12) lorsque sa température individuelle (T) se situe en dehors de la plage de température normale (R).

2. Procédé (100) selon la revendication 1, **caractérisé en ce que** le fonctionnement du réservoir individuel (12) détecté avec le défaut (F) est arrêté.

3. Procédé (100) selon l'une des revendications précédentes, **caractérisé en ce que** la valeur moyenne à partir de laquelle la valeur d'écart est calculée est une première valeur moyenne, la première valeur moyenne étant une valeur moyenne des différentes températures (T).

4. Procédé (100) selon la revendication 3, **caractérisé en ce que** la valeur d'écart est un écart type des températures individuelles (T) autour de la première valeur moyenne.

5. Procédé (100) selon l'une des revendications précédentes, **caractérisé en ce que** la valeur moyenne sur la base de laquelle le seuil de température normale (R) est calculé est une deuxième valeur moyenne, la deuxième valeur moyenne étant une médiane des températures individuelles (T).

6. Procédé (100) selon l'une des revendications précédentes, **caractérisé en ce qu'**au moins certaines des étapes du procédé (100) sont répétées en continu.

7. Procédé (100) selon l'une des revendications précédentes, **caractérisé en ce que** la conduite d'alimentation en hydrogène commune (18) comprend un capteur de pression commun (30) pour mesurer la pression (P) de l'hydrogène dans la conduite d'alimentation en hydrogène commune (18).

8. Procédé (100) selon l'une des revendications précédentes, **caractérisé en ce que** les températures individuelles (T) sont mesurées par des capteurs de température individuels (14) de chaque réservoir individuel (12).

9. Procédé (100) selon l'une des revendications précédentes, **caractérisé en ce que** les températures individuelles (T) sont les températures internes de l'hydrogène à l'intérieur des réservoirs individuels (12).

10. Procédé (100) selon l'une des revendications précédentes, **caractérisé en ce que** chacun des réservoirs individuels (12) est relié à la conduite d'alimentation en hydrogène commune (18) par l'intermédiaire d'une vanne de réservoir individuelle (16).

11. Procédé (100) selon l'une des revendications précédentes, **caractérisé en ce que** le système de réservoir (10) est un système de réservoir d'hydrogène d'un véhicule électrique à pile à combustible (60).

12. Produit logiciel comprenant des instructions qui, lorsque le programme est exécuté par un ordinateur, amènent l'ordinateur à exécuter le procédé (100) selon l'une des revendications précédentes.

13. Système de réservoirs (10) comprenant plusieurs réservoirs individuels (12) destinés à stocker de l'hydrogène, qui sont reliés à une conduite d'alimentation en hydrogène commune (18), le système de réservoirs (10) comprenant une unité de commande (20) configurée pour exécuter le procédé (100) selon l'une des revendications 1 à 11.

14. Véhicule électrique à pile à combustible (60), **caractérisé en ce qu'**il comprend le système de réservoir (10) selon la revendication 13 et un système de pile à combustible (50) relié de manière fluidique à la conduite d'alimentation en hydrogène commune (18) afin d'alimenter le système de pile à combustible (50) en hydrogène provenant du système de réservoir (10).
